Europäisches Patentamt

European Patent Office

Office européen des brevets

(19)

(11) **EP 0 894 836 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.$^7$: **C09D 17/00**

(21) Anmeldenummer: **98112297.1**

(22) Anmeldetag: **02.07.1998**

(54) **Slurry, enthaltend ein agglomeriertes carbonathaltiges Pigment**

Slurry containing an agglomerated carbonate-containing pigment

Suspension contenant un pigment à partir d'un carbonate aggloméré

(84) Benannte Vertragsstaaten:
**AT BE CH DE DK ES FI FR GB IT LI NL PT SE**

(30) Priorität: **28.07.1997 DE 19732429**

(43) Veröffentlichungstag der Anmeldung:
**03.02.1999 Patentblatt 1999/05**

(73) Patentinhaber: **Omya AG**
**4665 Oftringen (CH)**

(72) Erfinder:
• **Weitzel, Hans-Joachim**
**4806 Wikon (CH)**

• **Wermuth, Claude**
**4628 Wolfwil (CH)**
• **Strauch, Dieter**
**4800 Zofingen (CH)**

(74) Vertreter: **Reinhard - Skuhra - Weise & Partner**
**Postfach 44 01 51**
**80750 München (DE)**

(56) Entgegenhaltungen:
**EP-A- 0 531 685        WO-A-96/32448**

**Beschreibung**

Die Erfindung betrifft einen Slurry, enthaltend Wasser, carbonathaltiges Pigment und Dispergiermittel, sowie Verfahren zu dessen Herstellung sowie dessen Verwendung bei der Papierherstellung.

Mineralische Füllstoffe und Pigmente sind relativ billige Stoffe, die man z.B. Werkstoffen, Anstrichstoffen, Papier, Kunststoffen und dergleichen beimischt, um deren Volumen und/oder Gewicht zu erhöhen, aber auch oft, um die technische Verwendbarkeit zu verbessern.

Eine Gruppe von Calciumcarbonatpigmenten besteht z.B. aus natürlich vorkommendem Material. Hierzu gehören Kalkstein, Marmor, Kreide sowie die Schalen von im Meer und an den Küsten lebenden Organismen, z.B. Austernschalen.

Mineralische Füllstoffe müssen im allgemeinen vermahlen werden, um sie für die verschiedenen Anwendungsmöglichkeiten geeignet zu machen. Handelsübliche carbonathaltige Füllstoffe werden nach dem Stand der Technik folgendermassen aufbereitet:

Carbonathaltige Rohstoffe werden weltweit im Tagbau oder Untertagbau abgebaut. Die abgebauten carbonathaltigen Rohstoffe versetzt mit anorganischen oder organischen Verunreinigungen je nach Abbau-Gebiet, werden gereinigt und anschliessend trocken und/oder nass aufbereitet. Die Vormahlung erfolgt mittels Kugelmühlen-Mahlung und, falls erforderlich, anschliessender Flotation.

An solchen Ausgangsmaterialien wird eine weitere Nassvermahlung bei Feststoffgehalten von 30 - 75 Gew.% mittels Rührwerkskugelmühlen vorgenommen. Dabei können die Bedingungen so gewählt werden, dass Produkte mit Feinheiten von 50 - 100 Gew.% < 2 $\mu$m, mit und ohne Dispergiermittel resultieren.

Aus der US 4 767 464 sind bereits carbonathaltige Pigmente bekannt, die z. B. in Farben und Papieren verwendet werden können.

Aus der DE 4 128 570 A1 ist bereits ein Slurry bekannt, enthaltend carbonathaltige mineralische Füllstoffe, Pigmente oder ähnliche Materialien, der in der Papierindustrie verwendet werden kann.

Ganz allgemein kann man sagen, dass die Teilchengrösse einen erheblichen Einfluss auf die Eigenschaften des den Füllstoff enthaltenden Produktes, z.B. auf die Opazität hat. Mineralische Füllstoffe, auch wenn sie sehr fein vermahlen worden sind, beeinflussen auch immer noch negativ die Güte von Produkten, z.B. die Opazität. Nach dem Stande der Technik hat man deshalb auf verschiedene Weise versucht, die Eigenschaften von mineralischen Füllstoffen, insbesondere bei der Verwendung in Papiermassen, zu verbessern, insbesondere die Opazität zu verbessern.

Dabei hat man auch bereits versucht, den Anteil an Teilchen kleiner 0,2 $\mu$m so niedrig wie möglich zu halten, möglichst auf Null zu stellen. Verwiesen sei auf die DE 28 08 425, die einen mineralischen Füllstoff beschreibt, bei welchem der obere Schnitt 2 um ist, 85 - 95 Gew.% Teilchen < 1 $\mu$m und möglichst keine Teilchen < 0,2 $\mu$m enthalten sind.

Diese Versuche haben bisher zu unbefriedigenden Ergebnissen geführt. Man hat deshalb präzipitierte Calciumcarbonate (im folgenden PCC abgekürzt) eingesetzt, um bei Papieren eine höhere Opazität als mit natürlichen Calciumcarbonaten zu erreichen.

Aber diese präzipitierten Calciumcarbonate weisen ihrerseits Nachteile auf, die dem Fachmann bekannt sind, z.B. schlechtere Entwässerung auf der Papiermaschine und schlechtere Festigkeitseigenschaften der Papiere.

Eine Aufgabe der vorliegenden Erfindung ist es daher, einen Slurry der eingangs genannten Gattung für die Papierherstellung zu schaffen, der eine möglichst hohe Opazität im Papier ergibt. Insbesondere liegt der Erfindung die Aufgabe zugrunde, einen derartigen Slurry zu schaffen, der zu gleichen oder sogar zu einer höheren Opazität führt als handelsüblich verwendete präzipitierte Calciumcarbonate.

Diese Aufgabe wird erfindungsgemäss durch einen Slurry gelöst, der dadurch gekennzeichnet ist, dass er besteht aus 25 - 70 Gew.% agglomeriertem, carbonathaltigem Pigment und 0,1 - 1,0 Gew.% eines Dispergiermittels oder einer Dispergiermittelkombination und Rest Wasser bis 100 Gew.%,
wobei das agglomerierte carbonathaltige Pigment folgende Feinheitsmerkmale

a) 80 - 99 Gew.% < 2 $\mu$m
b) 50 - 90 Gew.% < 1 $\mu$m
c) 0 - 10 Gew.% < 0,2 $\mu$m und
d) einen Steilheitsfaktor von 1,5 - 2,0 und
e) eine Porosität von 45 - 65 % aufweist,

und wobei solche an sich bekannte bzw. handelsüblichliche Dispergiermittel bzw. Dispergiermittelkombinationen verwendet werden, die verhindern, dass die Agglomerate des agglomerierten carbonathaltigen Pigments im Slurry wieder zerstört werden.

Vorzugsweise sind im Slurry 26 - 69 Gew.% agglomeriertes carbonathaltiges Pigment, bevorzugter 27 - 67 Gew.% carbonathaltiges Pigment und bevorzugt 28 - 65 Gew.% carbonathaltiges Pigment enthalten.

Vorzugsweise sind im Slurry 0,15 bis 0,95 Gew.%, bevorzugter 0,17 - 0,9 Gew.% und bevorzugt 0,2 - 0,88 Gew.% eines Dispergiermittels oder einer Dispergiermittelkombination enthalten.

Vorzugsweise sind im Slurry Pigmente mit folgender Feinheit

a) 82 - 98 Gew.% < 2 $\mu$m
b) 51 - 89 Gew.% < 1 $\mu$m
c) 0 - 9 Gew.% < 0,2 $\mu$m, bevorzugter
a) 83 - 98 Gew.% < 2 $\mu$m
b) 54 - 88 Gew.% < 1 $\mu$m
c) 0 - 8 Gew.% < 0,2 $\mu$m, und bevorzugt
a) 84 - 97 Gew.% < 2 $\mu$m
b) 55 - 85 Gew.% < 1 $\mu$m
c) 0 - 7 Gew.% < 0,2 $\mu$m

enthalten.

Vorzugsweise liegt der Steilheitsfaktor in einem Bereich von 1,5 - 1,9. Sehr gute Ergebnisse werden mit einem Steilheitsfaktor von 1,5 - 1,8 erzielt. Ganz besonders gute Ergebnisse stellen sich bei einem Steilheitsfaktor von 1,5 - 1,75 ein.

Vorzugsweise beträgt die Porosität 47 - 65 %, bevorzugter ist eine Porosität von 49 - 63 % und bevorzugt ist eine Porosität von 51 - 61 %.

Vorzugsweise werden als Dispergiermittel kationische Dispergiermittel verwendet. Kationische Dispergiermittel sind z.B. handelsübliche quaternäre Ammonium-Verbindungen (Näheres zu "kationische Dispergiermittel" siehe DE 37 30 833 und DE 37 07 221).

Vorzugsweise werden weiterhin kationische und anionische Dispergiermittel in Kombination verwendet. Anionische Dispergiermittel sind z.B. handelsübliche Polyacrylsäuren.

Werden erfindungsgemäss Dispergiermittelkombinationen verwendet, so werden diese nicht vorher durch Mischen hergestellt, sondern sie werden einzeln, nacheinander in den Slurry eingerührt, vorzugsweise die kationischen Dispergiermittel zuerst.

Vorzugsweise werden als Dispergiermittel
Acrylsäure und/oder
Acrylsäureester und/oder
Acrylsäureamide und/oder
Acrylsäure-amid-halogenide, insbesondere
Acrylsäure-amid-chloride und/oder
Acrylsäure-ester-halogenide, insbesondere
Acrylsäure-ester-chloride und/oder
Copolymere der vorstehenden Dispergiermittel und/oder
Polyacrylsäure oder die den vorstehenden Verbindungen entsprechenden Verbindungen der Methacrylsäure verwendet.

Vorzugsweise besteht die Dispergiermittelkombination aus einem Copolymer aus den Monomeren

a $\alpha$) N-tri-alkyl-amino-alkyl-methacrylsäure-ester-halogenid
a $\beta$) Acrylsäure
        Copolymer aus den Monomeren
b $\alpha$) N-alkyl-N'trialkyl-amino-acrylsäure-amid-halogenid
b $\beta$) N-trialkyl-amino-acrylsäure-alkylester-halogenid
c) Polyacrylsäure.

Vorzugsweise besteht die Dispergiermittelkombination aus einem Copolymer aus den Monomeren

a $\alpha$) N-trimethyl-amino-methacrylsäure-ethylester-chlorid
a $\beta$) Acrylsäure
        Copolymer aus den Monomeren
b $\alpha$) N-propyl-N'trimethyl-amino-acrylsäure-amid-chlorid
b $\beta$) N-trimethyl-amino-acrylsäure-ethylester-chlorid
c) Polyacrylsäure.

Vorzugsweise bestehen die carbonathaltigen Pigmente aus Kreide und/oder Kalkstein und/oder Marmor und/oder dolomithaltigem Calciumcarbonat und/oder Dolomit oder aus natürlicher Kreide und/oder Kalkstein und/oder Marmor und/oder dolomithaltigem Calciumcarbonat und/oder Dolomit.

Die in der vorstehend offenbarten Lösung der gestellten Aufgabe enthaltenen Fachausdrücke werden im folgenden unter Verwendung von der Fachwelt bekannten Begriffen und der Fachwelt ohne weiteres zugänglichen Literaturstellen definiert, wobei auch die Messverfahren beschrieben werden:

**Verwendete Messverfahren:**

**Korngrössenverteilung:**

Alle in der vorliegenden Patentanmeldung genannten Feinheitsmerkmale der erfindungsgemäss hergestellten Produkte und der Vergleichsprodukte, wurden durch Sedimentationsanalyse im Schwerefeld mit dem Sedigraph 5100 der Firma Micromeritics, USA bestimmt. Dieses Gerät ist dem Durchschnittsfachmann bekannt und wird weltweit zur Bestimmung der Feinheit von Füllstoffen und Pigmenten verwendet.

Die Proben wurden folgendermassen für die Feinheitsbestimmung vorbereitet:

Eine 3 g (atro) carbonathaltiges Pigment enthaltende Slurry-Probe wurde mit 0,1 Gew.% Polyacrylsäure versetzt. Diese Probe wird mit einer 0,3 %igen, wässrigen kationischen Dispergiermittellösung auf 75 ml aufgefüllt und mittels Schnellrührer (20'000 Upm) während 1 min. und mittels Ultraschall während 10 min. dispergiert.

Als kationische Dispergiermittellösung wurde verwendet:

Ein Co-Polymer besteht aus:

  a) N-propyl-N'-trimethyl-amino-acrylsäureamid und
  b) einer Polyacrylsäure.

Das Verhältnis a) zu b) ist idealerweise bei 95 Mol% zu 5 Mol%.

Die gemessene Korngrössenverteilung wird als Durchgangssummenkurve und in tabellarischer Form ausgedrückt.

Der Resultatausdruck kann so programmiert werden, dass alle enthaltenen Feinheitsmerkmale direkt abgelesen werden können.

**Steilheitsfaktor:**

Der Steilheitsfaktor errechnet sich nach folgender Formel:

$$\text{Steilheitsfaktor} = \frac{\text{Teilchendurchmesser in } \mu\text{m bei 50 Gew.\%}}{\text{Teilchendurchmesser in } \mu\text{m bei 20 Gew.\%}}$$

**Porosität:**

Die Messung der Porosität erfolgt mit dem Hg-Pore Sizer 9310, der Firma Micromeritics, USA.

Das Messverfahren beruht auf dem kontinuierlichen Eindringen von Quecksilber in die offenen Poren einer Probe oder eines Körpers unter Vakuum bis 20 psia (entspricht 138 kPa) sowie mittels Hoch-Druck bis 25'000 psia (entspricht 172'400 kPa).

Nach Washburn ist der Druck dem Durchmesser eines zylindrischen Körpers, welcher das Eindringen von Quecksilber zulässt, gemäss untenstehender Gleichung umgekehrt proportional. Das eingedrungene Hg-Volumen wird als kumulatives Porenvolumen pro Gramm der Probe über der Kapazitätsänderung in $cm^3/g$ ermittelt.

$$\text{Porendurchmesser} = \frac{-4 \cdot \gamma \cdot \cos \sigma}{\text{Druck}}$$

  $\gamma$ = Oberflächenspannung von Quecksilber
  $\sigma$ = Kontaktwinkel zwischen Quecksilber und Prüfmaterial

Der Kontaktwinkel liegt idealerweise bei 130°

Die prozentuelle Porosität der Probe wird nach folgender Formel berechnet:

$$P = \frac{\text{Gesamt } V_P - \text{Makro } V_P}{\text{Mikro } V_P - \dfrac{1}{\rho_M}}$$

Gesamt $V_P$ =     Gesamtporenvolumen pro Menge Probe in cm$^3$/g

Makro $V_P$ =     Volumen der Makroporen pro Menge Probe in cm$^3$/g

Mikro $V_P$     = Volumen der Mikroporen pro Menge Probe in cm$^3$/g

$\rho_M$ =     Dichte der Probe

Dabei werden Poren > 10 μm als Makroporen betrachtet.

**Papier-Opazität und Papier-Weisse:**

Die Bestimmung der Opazität, als Mass für die Lichtdurchlässigkeit von Papier, wurde an den Labor-Blättern, mittels eines Spektralphotometers Typ Datacolor ELREPHO 2000 gemäss **DIN 53 146** bestimmt.

Die Bestimmung der Papier-Weisse erfolgt nach der **ISO-Norm Brightness R 457** im Tappi-Filter +UV-Licht mit einem Spektralphotometer Datacolor Elrepho 2000 oder 3300. Die Messung erfolgt über einem Stapel von 10 Blättern, um den Einfluss des Durchscheinens durch das Papier zu vermeiden.

**Biegesteifigkeit:**

Die Prüfung der Biegesteifigkeit erfolgt nach **DIN 53 123** + an Laborblättern mit einem Prüfgerät SE 017 der Firma Lorentzen & Wettre, Schweden.

Die Messung der Biegesteifigkeit kann an Papieren mit Flächengewichten von 35 g/m$^2$ aufwärts bis zu einer Dicke von 2 mm durchgeführt werden. Die Biegesteifigkeit wird in Längs- und Querrichtung zur Papierbahn bestimmt.

Papierstreifen mit einer Breite von 15 mm und einer Länge von 150 mm werden zugeschnitten. Anschliessend wird das Gewicht mittels Analysenwaage bestimmt und das Flächengewicht in g/m$^2$ ermittelt. Der zu messende Papierstreifen wird mittels Anregung in eine Schwingung gebracht. Gemessen wird die Länge des Papierstreifens bis zum Erreichen der Resonanz. Je grösser der Widerstand des Papierstreifens ist, umso länger ist die ermittelte Prüflänge in mm. In Längs- und Quer-Richtung zur Papierbahn werden je 10 Messungen durchgeführt.

$$\text{Biegesteifigkeit} \quad S = \frac{20}{1000} \cdot \left(\frac{L}{100}\right)^4 \cdot \left(\frac{M_A}{100}\right)$$

in mNm

$M_A$ =     Flächengewicht in g/m$^2$

$L$ =     Resonanzlänge in mm

**Lichtstreukoeffizient S nach Kubelka und Munk:**

Die Ermittlung des Lichtstreukoeffizienten S (in m$^2$/kg) und des Lichtabsorptionskoeffizienten K (in m$^2$/kg) an den Papierblättern erfolgt nach folgender Bestimmungsmethode: Mit einem Spektralphotometer Datacolor ELREPHO 2000 werden Reflexionswerte gemessen. Zusätzlich wird das Flächengewicht X des Papieres (in g/m$^2$) ermittelt.

Formel zeichen:

$R_0$ =     Der Reflektionswert eines Einzel-Blattes über schwarzem Untergrund

$R_\infty$ =     Der Reflektionswert "unendlich vieler" Blätter über schwarzem Untergrund

$X$ =     Flächengewicht des Papieres

$S$ =     Streukoeffizient, d.h. Anteil einer Lichtmenge, die von einer Materialschicht der Dicke 1 zurückgestreut wird.

$K$ =     Absortionskoeffizient, d.h. Anteil einer Lichtmenge, die von einer Materialschicht der Dicke 1 absorbiert wird.

Folgende Formeln werden verwendet zur Berechnung des Lichtstreukoeffizienten:

$$S = \frac{X}{b} \cdot \text{arc coth}\left(\frac{1 - a \cdot R_0}{b \cdot R_0}\right)$$

$$a = \frac{1}{2} \cdot \left(\frac{1}{R_\infty} + R_\infty\right) \quad \text{und} \quad b = \frac{1}{2} \cdot \left(\frac{1}{R_\infty} - R_\infty\right)$$

$$K = \frac{S \cdot (1 - R_\infty)^2}{2 \cdot R_\infty}$$

Erfindungsgemäss können alle Dispergiermittel und alle Dispergiermittelkombinationen verwendet werden, die verhindern, dass die Agglomerate des agglomerierten carbonathaltigen Pigments im Slurry wieder zerstört werden. Hierzu können geeignete handelsübliche Dispergiermittel eingesetzt werden. Vorzugsweise Dispergiermittel und Dispergiermittelkombinationen, auf die die Erfindung freilich nicht beschränkt ist, wurden vorstehend beschrieben.

Eine Kontrolle, ob Agglomerate beim Zusatz ungeeigneter Dispergiermittel wieder zerstört werden, kann durch Bestimmung der Feinheit, wie vorstehend beschrieben, erfolgen. Sind die vorstehend beschriebenen Feinheitsmerkmale gegeben, hat das Dispergiermittel seine Aufgabe bzw. hat die Dispergiermittelkombination ihre Aufgabe erfüllt.

Im Rahmen der Erfindung wurden aus agglomerierten Slurries auch getrocknete Produkte hergestellt und untersucht. Es konnten zwar nicht die gleich hohen Opazitätswerte erhalten werden, wie mit den vorstehend beschriebenen, d.h. aufkonzentrierten, Slurries, doch sind auch diese Produkte im Rahmen der Erfindung vorteilhaft.

Das erfindungsgemässe Pigment-Trockenprodukt besteht aus 100 Gew.% agglomeriertem, carbonathaltigem Pigment,

wobei das agglomerierte carbonathaltige Pigment folgende Feinheitsmerkmale

 a) 80 - 99 Gew.% < 2 μm
 b) 50 - 90 Gew.% < 1 μm
 c) 0 - 10 Gew.% < 0,2 μm und
 d) einen Steilheitsfaktor von 1,5 - 2,0 und
 e) eine Porosität von 45 - 65 % aufweist.

Überraschenderweise wurde erfindungsgemäss gefunden, dass die erfindungsgemässe Aufgabe, nämlich die Verbesserung der Opazität, dadurch gelöst werden kann, dass ultrafeine Teilchen des hergestellten Pigments, die optisch bekanntlich unwirksam sind, durch Agglomerierung in eine optisch wirksame Teilchengrösse überführt werden.

Im folgenden wird die Herstellung der erfindungsgemässen Versuchsprodukte beschrieben:

Zunächst wird ein allgemeines erfindungsgemässes Herstellungsverfahren beschrieben, danach werden weitere Ausführungsformen des erfindungsgemässen Herstellungsverfahrens beschrieben, die sich auf die speziellen Verwendungen der erfindungsgemässen Produkte beziehen.

**Allgemeines Herstellungsverfahren:**

 1) Nach dem Stand der Technik aufbereitetes Ausgangsmaterial (siehe oben S. 2) wird in einer weiteren Nassvermahlung, bei einem Feststoffgehalt von 25 - 40 Gew.%, mittels einer Rührwerkskugelmühle, mit Mahlkörpern von 1 - 2 mm Durchmesser, ohne Dispergiermittel auf eine Feinheit von 50 - 90 Gew.% < 1 μm aufgemahlen.

 2) Die anschliessende thermische Behandlung ohne Dispergiermittel bewirkt die Agglomeration der ultrafeinen Teilchen des Pigments.

 3) Der agglomerierte Slurry wird - falls im Hinblick auf das Endprodukt erforderlich - anschliessend mechanisch oder thermisch entwässert, z.B. mittels Zentrifugen, Kammer-Filterpressen oder thermischen Entwässerungsanlagen, nämlich auf 25 - 70 Gew.% Pigment.

4) Schliesslich werden solche an sich bekannte bzw. handelsübliche Dispergiermittel unter Rühren zugesetzt, die gewährleisten, dass die Agglomerate gemäss Verfahrens-Stufen 2 und 3 erhalten bleiben.

Das vorstehend offenbarte Pigment-Trockenprodukt wird in einfacher Weise so hergestellt, dass nach der Agglomerierung (Verfahrensstufe 2) die Verfahrensstufe 3 (Aufkonzentrierung) nicht bis 70 Gew.% Pigment, sondern bis 100 Gew.% Pigment durchgeführt wird. In diesem Fall entfällt die Verfahrensstufe 4, d.h., das Endprodukt enthält kein Dispergiermittel.

Die Verfahrensstufe 2 (thermische Agglomerierung) wird im einzelnen wie folgt durchgeführt:
Der gemäss Verfahrensstufe 1 erhaltene Slurry wird in ein Rührgefäss mit guter Isolation, das beheizbar ist, eingetragen. Vorzugsweise ist das Rührgefäss so konstruiert, dass ein Wasserverlust während der Agglomerierung möglichst vermieden wird (z.B. wird eine Kondensationseinrichtung verwendet). Der Slurry wird nun bei einer Temperatur von 65°C bis 80°C über einen Zeitraum gerührt (vorzugsweise langsam gerührt) bis die erforderliche Agglomeration beendet ist. Dies wird dadurch kontrolliert, dass in geeigneten Zeitabständen, z.B. in einem 2-stündigen Rhythmus, Proben entnommen werden und deren Korngrössenverteilung gemessen wird. Wenn das Pigment des Slurrys die erfindungsgemässen Feinheitsmerkmale (Korngrössenverteilung und Steilheitsfaktor) aufweist, dann ist die Agglomerierung beendet.

## Herstellung der erfindungsgemässen Produkte

### Beispiel 1:

Aus 25 kg flotiertem, vorgemahlenem und trockenem norwegischem Marmor wurde durch Zugabe von Wasser ein mit 35 Gew.% Slurry der Feinheit $d_{50}$ = 12 μm (50 Gew.% < 12 μm) hergestellt. Dieser Slurry wurde in einer 12 1 Rührwerkskugelmühle (Firma Drais) in Kreislauf-Fahrweise vermahlen. Die Mahlbedingungen wurden mit 10 m/s Umfangsgeschwindigkeit und 4 l/min Volumenstrom eingestellt.

Die ermittelte Feinheit nach 115 Minuten Mahldauer betrug:
91 Gew.% < 2 μm, 66 Gew.% < 1 μm, 7 Gew.% < 0,2 μm, Steilheitsfaktor (Verhältnis der Durchmesser bei 50 Gew.% zum Durchmesser bei 20 Gew.%) = 2,0
Der Slurry wurde nun in einem 7 l Doppelwand-Gefäss thermisch bei 65°C weiterbehandelt, ohne Zugabe an Dispergierungsmittel. Nach 20 Stunden thermischer Agglomerierung wurden folgende Feinheiten ermittelt: 58 Gew.% < 1 μm, 0 Gew.% < 0,2 μm, bei einem Steilheitsfaktor von 1,69.
Anschliessend erfolgte keine Aufkonzentrierung.
Die Slurry-Dispergierung erfolgte mit 0,17 Gew.% der unten beschriebenen Dispergiermittel-Kombination aus

a) N-trimethyl-amino-methacrylsäure-ethylester-chlorid/Acrylsäure-Copolymer und
b)   N-propyl-N'-trimethyl-amino-acrylsäure-amid-chlorid/N-trimethyl-amino-acrylsäure-ethylester-chlorid-copolymer und
c) einer Polyacrylsäure

Das folgende Verhältnis wurde gewählt
a) = 5 Teile und b) = 5 Teile sowie c) = 1 Teil
Der Feststoffgehalt betrug 40 Gew.% und die Feinheit 58 Gew.% < 1 μm, 0 Gew.% < 0,2 μm, bei einem Steilheitsfaktor von 1,78.

### Beispiel 2:

25 kg flotierter, vorgemahlener, trockener norwegischer Marmor wurden wie in Beispiel 1 während 180 Minuten vermahlen.
Die resultierende Feinheit betrug: 98 Gew.% < 2 μm, 82 Gew.% < 1 μm, 11 Gew.% < 0,2 μm, der Steilheitsfaktor: 1,96
Nach 16 Stunden thermischer Agglomerierung betrug die Feinheit 81 Gew.% < 1 μm, 4 Gew.% < 0,2 μm und der Steilheitsfaktor 1,55. Es wurde keine Aufkonzentrierung vorgenommen.
Dispergiert wurde mit 0,33 Gew.% der in Beispiel 1 beschriebenen Dispergiermittel-Kombination.
Der End-Feststoffgehalt betrug 40 Gew.%, die Feinheit 82 Gew.% < 1 μm, 4 Gew.% < 0,2 μm, bei einem Steilheitsfaktor von 1,58.
Die in Beispiel 1 und 2 hergestellten Produkte können in einer On-Site-Anlage Verwendung finden.

Carbonathaltige Slurries die nicht aufkonzentriert werden müssen, können direkt im Papier-Herstellungsprozess als Füllstoffe verwendet werden. Die Slurry-Konzentration soll über 25 Gew.% liegen. Bei den so hergestellten Füllstoffen entfällt die Entwässerung und diese Produkte zeichnen sich demnach durch geringere Herstellkosten aus.

**Beispiel 3:**

25 kg flotierter, vorgemahlener, trockener norwegischer Marmor wurden wie in Beispiel 1 vermahlen. Nach 115 Minuten Mahldauer wurden die Feinheits-Merkmale mit dem Sedigraphen 5100 bestimmt.
Die Feinheit betrug 91 Gew.% < 2 µm, 66 Gew.% < 1 µm, 7 Gew.% < 0,2 µm, der Steilheitsfaktor 2,0.
Der Slurry wurde anschliessend 20 Stunden in einem Doppelwandgefäss bei 65°C langsam gerührt und dabei agglomeriert.
Erreicht wurde eine Feinheit von 58 Gew.% < 1 µm, 0 Gew.% < 0,2 µm und ein Steilheitsfaktor von 1,69.
Durch Behandlung mit kurzwelligen Wärmestrahlen und Abführung des Wassers wurde der Slurry auf eine Konzentration von 50 Gew.% gebracht.
Der so aufkonzentrierte Slurry wurde durch Zugabe von 0,25 Gew.% einer Dispergiermittel-Kombination aus

> a) N-trimethyl-amino-methacrylsäure-ethylester-chlorid/Acrylsäure-Copolymer
> b) N-propyl-N'-trimethyl-amino-acrylsäure-amid-chlorid/N-trimethyl-amino-acrylsäure-ethylester-chlorid-copolymer
> c) Polyacrylsäure

im Verhältnis a:b:c = 5:5:1 stabilisiert.
Die resultierende Feinheit betrug 59 Gew.% < 1 µm und 0 Gew.% < 0,2 µm, der Steilheitsfaktor 1,72.

**Beispiel 4:**

25 kg flotierter, vorgemahlener, trockener norwegischer Marmor wurden, wie in Beispiel 1, während 180 Minuten vermahlen. Feinheit: 98 Gew.% < 2 µm, 82 Gew.% < 1 µm, 11 Gew.% < 0,2 µm, Steilheitsfaktor: 1,96.
Nach 16 h thermischer Agglomerierung: Feinheit 81 Gew.% < 1 µm, 4 Gew.% < 0,2 µm, Steilheitsfaktor: 1,55.
Nach Aufkonzentrierung auf 50 Gew.% und Dispergierung mit 0,5 Gew.% der in Beispiel 1 beschriebenen Dispergiermittel-Kombination betrug die Feinheit 81 Gew.% < 1 µm, 7 Gew.% < 0,2 µm, der Steilheitsfaktor 1,76.
Die in Beispiel 3 und 4 hergestellten Produkte sind geeignet für Standard-Slurries in Konzentrationen bis 70 Gew.%.
Nach der Nass-Vermahlung in einer Rührwerkskugelmühle bei 25 - 40 Gew.%, ohne den Zusatz an Dispergierungsmittel, wird das erhaltene carbonathaltige Slurry-Produkt vor der Entwässerung in einem temperierten Rührgefäss unter Rühren bei 5 - 35 Stunden agglomeriert. Die Temperatur wird zwischen 50 - 85°C gewählt. Der Feststoffgehalt wird so eingestellt, dass sich der Slurry gut rühren lässt, ohne einzudicken. Die Viskositätsregelung erfolgt durch Wasserzugabe. Der so agglomerierte Slurry wird nun entwässert, das heisst zum Beispiel, mittels Zentrifuge, KammerFilterpresse oder einer thermischen Entwässerungsanlage auf einen Feststoffgehalt von 50 - 70 Gew.% gebracht.

**Beispiel 5:**

25 kg flotierter, vorgemahlener, trockener norwegischer Marmor wurden, wie in Beispiel 1, während 115 Minuten vermahlen. Feinheit: 91 Gew.% < 2 µm, 66 Gew.% < 1 µm, 7 Gew.% < 0,2 µm, Steilheitsfaktor: 2,0.
Nach 20 Stunden thermischer Agglomerierung: Feinheit: 58 Gew.% < 1 µm, 0 Gew.% < 0,2 µm, Steilheitsfaktor: 1,69.
Das Produkt wurde bis zur Gewichtskonstanz sprühgetrocknet. Feinheit: 60 Gew.% < 1 µm, 4 Gew.% < 0,2 µm, Steilheitsfaktor: 1,77
Das derart hergestellte Produkt findet als Trockenpigment Verwendung.

**Anmerkung:**

Alle thermischen Agglomerierungen der Beispiele 1 - 5 wurden bei 65°C durchgeführt.
Die Dispergierung der erfindungsgemässen Slurries erfolgte bei allen Beispielen gemäss Verfahrensstufe 4:
Die benötigte Dispergiermittelmenge wurde in einem 1 l Rührgefäss dem Slurry zugefügt. Bei Raumtemperatur wurde mit einer Dissolverscheibe, Durchmesser 50 mm, während einer Stunde dispergiert. Die Umfangsgeschwindigkeit der Scheibe betrug 8 - 10 m/s.
Die vorstehenden Beispiele und die nachfolgenden Tabellen enthalten nicht die Angaben der Feinheit in Gew.% bei 2 µm, weil sich dieser Wert während der Agglomerierung nicht verändert.

**Beschreibung der Vergleichsprodukte:**

Als Standard für natürliches Calciumcarbonat (NCC) wurde ein kommerziell erhältliches, kationisch dispergiertes Produkt HYDROCARB HO der Firma Hustadmarmor (Elnesvågen, N) eingesetzt.

Der Slurry hat einen Feststoffgehalt von 67 Gew.% und folgende Feinheitsmerkmale:

87 Gew.% < 2 µm, 60 Gew.% < 1 µm, 6 Gew.% < 0,5 µm und der Steilheitsfaktor beträgt 2,0.

Als Vergleichsprodukt für präzipitiertes Calciumcarbonat (PCC) wurde ein an sich bekanntes Füllstoff-Handelsprodukt Albacar HO der Firma Specialty Minerals Incorporation (Bethlehem, USA) gewählt. Dieses präzipitierte Calciumcarbonat, welches trocken vorliegt, wird als Standard für Papiere mit hoher Opazität verwendet.

Feinheitsmerkmale: 66 Gew.% < 2 µm, 22 Gew.% < 1 µm, 4 Gew.% < 0,5 µm

Steilheitsfaktor: 1,8

Tabelle 1:

| Feinheitsmerkmale der Beispiele und der Handelsprodukte | | | | | | | |
|---|---|---|---|---|---|---|---|
| Beispiele | Feststoff Gew. % | Dipergiermittelmenge. Gew.% | Feinheit < 1 µm, % | Feinheit < 0.5 µm, % | Feinheit < 0.2 µm, % | Steilheitsfaktor | Hg-Porosität, % |
| Nr. 1 | 40 | 0,17 | 58 | 21 | 0 | 1,78 | 53,5 |
| Nr. 2 | 40 | 0,33 | 82 | 36 | 4 | 1,58 | 56,0 |
| Nr. 3 | 50 | 0.25 | 59 | 20 | 0 | 1.72 | 51,1 |
| Nr. 4 | 50 | 0.50 | 81 | 40 | 7 | 1,76 | 52,5 |
| Nr. 5 | 100 | kein | 60 | 22 | 4 | 1.77 | 52,6 |
| zum Vergleich: NCC Standard | 67 | 0.21 | 60 | 26 | 6 | 2.0 | 44.3 |
| zum Vergleich: PCC Standard | 100 | kein | 22 | 9 | 4 | 1,80 | 75,6 |

## Anwendungsbeispiele

### Herstellung und Prüfung in der Papier-Erzeugung

45 g (atro) eines Faserstoffgemisches mit 20 Gew.% Feststoffgehalt, bestehend aus 80 Gew.% Birkesulfatzellstoff und 20 Gew.% Kiefersulfatzellstoff wurde auf 6 l Wasser verdünnt und unter Rühren homogenisiert. Die benötigte Füllstoffmenge wurde in ca. 500 ml Wasser aufgeschlämmt, zum Faserstoffgemisch zugefügt, auf 10 l aufgefüllt und während 15 Minuten weiter gerührt.

Die für die Fläche eines Blattes berechnete Menge von Füllstoff/Fasergemisch wurde abgenommen, mit 1,25 ml einer 0,108 %igen Lösung Prästearat PK 30 (kat. Retentionsmittel, Chemische Fabrik Stockhausen, Krefeld, D) versetzt und während 20 Sekunden gerührt.

Danach wird diese Mischung in die Blattbildungssäule eines Rapid-Köthen-Blattbildners überführt, in welcher mit 7 l Wasser das Blatt durch Wirbeln, Beruhigen und Absaugen gebildet wird. Anschliessend wurde 6 Minuten unter Vakuum (70 mbar) bei 105°C getrocknet. Die Kontrolle von Flächengewicht und Füllgrad erfolgte mittels Analysenwaage und Veraschung des Blattes.

Es wurden Blätter mit 20 Gew.% Pigmentanteil und einem Flächengewicht von 75 g/m$^2$ gebildet.

Tabelle 2:

| Prüfung der optischen Eigenschaften in der Papiermasse | | | | | |
|---|---|---|---|---|---|
| **Beispiele** | **Füllstoff** | | | **Papier** | |
| | **Feinheit < 1 $\mu$m, %** | **Feinheit < 0,2 $\mu$m, %** | **Feststoff Gew. %** | **Streukoeffizient, m$^2$/kg** | **Papier - Opazität, %** |
| **Nr. 1** | 58 | 0 | 40 | 62,5 | 87,9 |
| **Nr. 2** | 82 | 4 | 40 | 67,1 | 89,2 |
| **Nr. 3** | 59 | 0 | 50 | 63,9 | 88,4 |
| **Nr. 4** | 81 | 7 | 50 | 68,5 | 89,4 |
| **Nr. 5** | 60 | 4 | 100 | 60,8 | 88,2 |
| **zum Vergleich: NCC Standard** | 60 | 6 | 65 | 61,3 | 87,6 |
| **zum Vergleich: PCC Standard** | 22 | 4 | 100 | 65,3 | 88,1 |

Die vorstehende Tabelle 2 zeigt in überzeugender Weise, dass die Aufgabe der vorliegenden Erfindung gelöst wurde, d.h. Slurries der eingangs genannten Gattung für die Papierherstellung zu schaffen, die eine möglichst hohe Opazität im Papier ergeben, insbesondere zu gleichen oder sogar zu höheren Opazitäten führen als handelsüblich verwendete Calciumcarbonate und handelsüblich verwendete präzipitierte Calciumcarbonate.

Weiterhin wurde überraschenderweise mit den erfindungsgemässen agglomerierten Versuchsprodukten, bei einer hohen Papier-Opazität eine bessere Papierfestigkeit als mit den NCC-Standardprodukt ermittelt.

Um Papiere mit hoher Opazität herzustellen, muss meistens ein Verlust der Papierfestigkeit in Kauf genommen werden. Um ein gutes Papier herzustellen, ist eine hohe Papier-Biegesteifigkeit jedoch erwünscht. Die mit dem erfindungsgemässen Beispiel 3 hergestellten Produkte zeigen überraschenderweise bei einer deutlich höheren Opazität, im Vergleich zum NCC-Standard eine Steigerung der Biegesteifigkeit um ca. 10 %, wie sich aus der folgenden Tabelle 3 ergibt.

Schliesslich zeigt Tabelle 2, dass erfindungsgemäss neben der Verbesserung der Opazität überraschenderweise der Streukoeffizient der Papiere verbessert werden konnte, was eine weitere Verbesserung der optischen Eigenschaften der Papiere bedeutet.

Tabelle 3:

| Prüfung der mechanischen Eigenschaften in der Papier-Erzeugung | | | | | |
|---|---|---|---|---|---|
| **Beispiele** | **Füllstoff** | | | **Papier** | |
| | **Feinheit < 1 μm, %** | **Feinheit < 0,2 μm, %** | **Feststoff Gew. %** | **Papier - Opazität, %** | **Biegesteifigkeit, mNm** |
| **Nr. 3** | 59 | 0 | 50 | 88,4 | 0,294 |
| **NCC Standard** | 60 | 6 | 65 | 87,6 | 0,271 |
| **zum Vergleich: PCC Standard** | 22 | 4 | 100 | 88,1 | 0,312 |

Der erfindungsgemässe Slurry und das erfindungsgemässe Pigment-Trockenprodukt können vorteilhaft bei den Papierherstellern, insbesondere in der Papiermasse in gestrichenen Papieren und in Karten, sowie in der Farben- und Lack-Industrie, insbesondere zur Herstellung wässriger Anstrichsysteme verwendet werden.

**Patentansprüche**

1.  Slurry, enthaltend Wasser, carbonathaltiges Pigment und Dispergiermittel,
    **dadurch gekennzeichnet,**
    **dass** er besteht aus
    25 - 70 Gew.% agglomeriertem, carbonathaltigem Pigment und 0,1 - 1,0 Gew.% eines Dispergiermittels oder einer Dispergiermittelkombination und Rest Wasser bis 100 Gew.%, wobei das agglomerierte carbonathaltige Pigment folgende Feinheitsmerkmale

    a) 80 - 99 Gew.% < 2 μm
    b) 50 - 90 Gew.% < 1 μm
    c) 0 - 10 Gew.% < 0,2 μm und
    d) einen Steilheitsfaktor von 1,5 - 2,0 und
    e) eine Porosität von 45 - 65 % aufweist,

    und wobei solche, an in sich bekannte bzw. handelsübliche Dispergiermittel bzw. Dispergiermittelkombinationen verwendet werden, die verhindern, dass die Agglomerate des agglomerierten carbonathaltigen Pigments im Slurry wieder zerstört werden.

2.  Slurry nach Anspruch 1, enthaltend Wasser, carbonathaltiges Pigment und Dispergiermittel,
    **dadurch gekennzeichnet,**
    **dass** er besteht aus
    25 - 70 Gew.% agglomeriertem, carbonathaltigem Pigment und 0,1 - 1,0 Gew.% eines Dispergiermittels oder einer Dispergiermittelkombination und Rest Wasser bis 100 Gew.%, wobei das agglomerierte carbonathaltige Pigment folgende Feinheitsmerkmale

    a) 80 - 99 Gew.% < 2 μm
    b) 50 - 90 Gew.% < 1 μm
    c) 0 - 10 Gew.% < 0,2 μm und
    d) einen Steilheitsfaktor von 1,5 - 2,0 und
    e) eine Porosität von 45 - 65 % aufweist,

    wobei die Agglomerierung des carbonathaltigen Pigments dadurch bewirkt wird, dass der Slurry einer Wärmebehandlung unterworfen wird, bis die Agglomerierung beendet ist
    und wobei solche, an in sich bekannte bzw. handelsübliche Dispergiermittel bzw. Dispergiermittelkombinationen verwendet werden, die verhindern, dass die Agglomerate des agglomerierten carbonathaltigen Pigments im Slurry wieder zerstört werden.

3. Slurry nach Anspruch 1 oder 2,
**dadurch gekennzeichnet,**
**dass** die agglomerierten carbonathaltigen Pigmente aus Kreide und/oder Kalkstein und/oder Marmor und/oder dolomithaltigem Calciumcarbonat und/oder Dolomit und/oder natürlicher Kreide und/oder natürlichen Kalkstein und/oder natürlichem dolomithaltigem Calciumcarbonat und/oder natürlichem Dolomit bestehen.

4. Slurry nach Anspruch 1 oder 2,
**dadurch gekennzeichnet,**
**dass** kationische Dispergiermittel allein oder in Kombination mit anionischen Dispergiermitteln verwendet werden.

5. Slurry nach einem oder mehreren der vorgehenden Ansprüche,
**dadurch gekennzeichnet,**
**dass** als kationische Dispergiermittel quaternäre Ammoniumverbindungen und als anionische Dispergiermittel Polyacrylsäure verwendet werden.

6. Slurry nach einem oder mehreren der vorgehenden Ansprüche,
**dadurch gekennzeichnet,**
**dass** als Dispergiermittel
Acrylsäure und/oder
Acrylsäureester und/oder
Acrylsäureamide und/oder
Acrylsäure-amid-halogenide, insbesondere
Acrylsäure-amid-chloride und/oder
Acrylsäure-ester-halogenide, insbesondere
Acrylsäure-ester-chloride und/oder
Copolymere der vorstehenden Dispergiermittel und/oder Polyacrylsäure oder die den vorstehenden Verbindungen entsprechenden Verbindungen der Methacrylsäure verwendet werden.

7. Slurry nach einem oder mehreren der vorhergehenden Ansprüche,
**dadurch gekennzeichnet**,

a) dass die Dispergiermittelkombination besteht aus einem Copolymer aus den Monomeren
a $\alpha$ ) N-tri-alkyl-amino-alkyl-methacrylsäure-ester-halogenid
a $\beta$) Acrylsäure
b) einem Copolymeren aus den Monomeren
b $\alpha$) N-alkyl-N'-trialkyl-amino-acrylsäure-amid-halogenid
b $\beta$) N-tri-alkyl-amino-acrylsäure-alkyl-ester-halogenid und
c) Polyacrylsäure

8. Slurry nach einem oder mehreren der vorgehenden Ansprüche,
**dadurch gekennzeichnet**,

a) dass die Dispergiermittelkombination besteht aus einem Copolymer aus den Monomeren
a $\alpha$) N-Trimethyl-amino-methacrylsäure-ethylester-chlorid
a $\beta$) Acrylsäure
b) einem Copolymeren aus den Monomeren
b $\alpha$) N-Propyl-N'-trimethyl-amino-acrylsäure-amid-chlorid
b $\beta$) N-Trimethyl-amino-acrylsäure-ethylester-chloridund
c) Polyacrylsäure.

9. Slurry nach einem oder mehreren der vorgehenden Ansprüche,
**dadurch gekennzeichnet,**
**dass** 26 - 69 Gew.%, bevorzugter 27 - 67 Gew.% und bevorzugt 28 - 65 Gew. % agglomeriertes carbonathaltiges Pigment enthalten sind.

10. Slurry nach einem oder mehreren der vorgehenden Ansprüche,
**dadurch gekennzeichnet,**
**dass** 0,15 - 0,95 Gew.%, bevorzugter 0,17 - 0,9 Gew.% und bevorzugt 0,2 - 0,88 Gew.% des Dispergiermittels oder der Dispergiermittelkombination enthalten sind.

**11.** Slurry nach einem oder mehreren der vorhergehenden Ansprüche,
**dadurch gekennzeichnet,**
**dass** das agglomerierte carbonathaltige Pigment folgende Feinheitsmerkmale aufweist:

a) 82 - 98 Gew.% < 2 µm
b) 51 - 89 Gew.% < 1 µm
c) 0 - 9 Gew.% < 0,2 µm, bevorzugter
a) 83 - 98 Gew.% < 2 µm
b) 54 - 88 Gew.% < 1 µm
c) 0 - 8 Gew.% < 0,2 µm, bevorzugter
a) 84 - 97 Gew.% < 2 µm
b) 55 - 85 Gew.% < 1 µm
c) 0 - 7 Gew.% < 0,2 µm.

**12.** Slurry nach einem oder mehreren der vorgehenden Ansprüche,
**dadurch gekennzeichnet,**
**dass** der Steilheitsfaktor 1,5 - 1,9, bevorzugter 1,5 - 1,8 und bevorzugt 1,5 - 1,75 beträgt.

**13.** Slurry nach einem oder mehreren der vorgehenden Ansprüche,
**dadurch gekennzeichnet,**
**dass** die Porosität 47 - 65 %, bevorzugter 49 - 63 % und bevorzugt 51 - 61 % beträgt.

**14.** Verfahren zur Herstellung des Slurry nach einem oder mehreren der vorhergehenden Ansprüche,
**dadurch gekennzeichnet**,

a) dass ein nach dem Stand der Technik aufbereitetes Ausgangsmaterial in einer Nassvermahlung bei einem Feststoffgehalt 25 - 40 Gew.% ohne Dispergiermittel auf eine Feinheit von 50 - 90 Gew.% < 1 µm aufgemahlen wird,
b) anschliessend die Agglomeration der ultrafeinen Teilchen durch thermische Behandlung des Slurry ohne Dispergiermittel bewirkt wird,
c) anschliessend der agglomerierte Slurry - falls erforderlich - auf einen Feststoffgehalt von 25 - 70 Gew.% Pigment entwässert wird und
d) schliesslich solche an sich bekannte bzw. handelsübliche Dispergiermittel unter Rühren zugesetzt werden, die gewährleisten, dass die Agglomerate erhalten bleiben.

**15.** Verfahren nach Anspruch 14,
**dadurch gekennzeichnet,**
**dass** die Agglomerierung durch Erwärmen des Slurry auf 65°C bis 80°C und Rühren des Slurry über einen Zeitraum durchgeführt wird, bis die Agglomerierung beendet ist.

**16.** Verwendung des Slurrys nach einem oder mehreren der Ansprüche 1 bis 13 bei der Papierherstellung, insbesondere in der Papiermasse, in gestrichenen Papieren und in Karton sowie in der Farben- und Lackindustrie, insbesondere zur Herstellung wässriger Anstrichsysteme.

**Claims**

**1.** Slurry containing water, carbonate-containing pigment, and dispersant,
**characterized in that**
said slurry consists of
25 - 70 % by weight of agglomerated carbonate-containing pigment and 0,1 - 1,0 % by weight of a dispersant or a combination of dispersants, with the balance being water up to 100 % by weight, wherein the agglomerated carbonate-containing pigment shows the following fineness characteristics

a) 80 - 99 % by weight < 2µm;
b) 50 - 90 % by weight < 1µm;

c) 0 - 10 % by weight < 0,2 $\mu$m; and
d) a contrast factor of 1,5 - 2,0; and
e) a porosity of 45 - 65 %;

and wherein such dispersants or dispersant combinations are used which are known per se or commercially available, respectively, which prevent the agglomerates of the agglomerated carbonate-containing pigment in the slurry from being destroyed.

2. Slurry according to claim 1, containing water, carbonate-containing pigment, and dispersant,
**characterized in that**
said slurry consists of
25 - 70 % by weight of agglomerated carbonate-containing pigment and 0,1 - 1,0 % by weight of a dispersant or a combination of dispersants, with the balance being water up to 100 % by weight, wherein the agglomerated carbonate-containing pigment shows the following fineness characteristics

a) 80 - 99 % by weight < 2$\mu$m;
b) 50 - 90 % by weight < 1$\mu$m;
c) 0 - 10 % by weight < 0,2 $\mu$m; and
d) a contrast factor of 1,5 - 2,0; and
e) a porosity of 45 - 65 %;

and wherein the agglomeration of the carbonate-containing pigment is effected by subjecting the slurry to a heat treatment until agglomeration is complete; and wherein such dispersants or dispersant combinations are used which are known per se or commercially available, respectively, which prevent the agglomerates of the agglomerated carbonate-containing pigment in the slurry from being destroyed.

3. Slurry according to claim 1 or 2,
**characterized in that**
said agglomerated carbonate-containing pigments consist of chalk and/or limestone and/or marble and/or dolomitic calcium carbonate and/or dolomite and/or natural chalk and/or natural limestone and/or natural dolomitic calcium carbonate and/or natural dolomite.

4. Slurry according to claim 1 or 2,
**characterized in that**
said cationic dispersants are used alone or in combination with other anionic dispersants.

5. Slurry according to one or more of the preceding claims,
**characterized in that**
as said cationic dispersants quarternary ammonium compounds are used and that as said anionic dispersants polyacrylic acid is used.

6. Slurry according to one or more of the preceding claims,
**characterized in that**
as dispersants are used
acrylic acid and/or
acrylic esters and/or
acrylamides and/or
acrylamide-halogenides, in particular
acrylamide-chlorides and/or
acrylate-halogenides, in particular
acrylate-chlorides and/or
copolymers of the above dispersants and/or polyacrylic acid or the methacrylic acid compounds corresponding to the above listed compounds.

7. Slurry according to one or more of the preceding claims,
**characterized in that**

a) said combination of dispersants consists of a copolymer of the monomers

a α) N-tri-alkyl-amino-alkyl-methacrylat-halogenide

a β) acrylic acid;

b) a copolymer of the monomers

b α) N-alkyl-N'-trialkyl-amino-acrylamide-halogenide

b β) N-trialkyl-amino-alkyl acrylate-halogenide; and

c) polyacrylic acid.

8. Slurry according to one or more of the preceding claims
   **characterized in that**

   a) said combination of dispersants consists of a copolymer of the monomers

   a α) N-tri-methyl-amino-ethyl methacrylate-chloride

   a β) acrylic acid;

   b) a copolymer of the monomers

   b α) N-propyl-N'-trimethyl-amino-acrylamide-chloride

   b β) N-trimethyl-amino-ethyl acrylate-chloride, and

   c) polyacrylic acid.

9. Slurry according to one or more of the preceding claims,
   **characterized in that**
   said slurry contains 26 - 69 % by weight, more preferably 27 - 67 % by weight and preferably 28 - 65 % by weight of agglomerated carbonate-containing pigment.

10. Slurry according to one or more of the preceding claims,
    **characterized in that**
    in said slurry are contained 0,15 - 0,95 % by weight, more preferably 0,17 - 0,9 % by weight and preferably 0,2 - 0,88 % by weight of the dispersant or combination of dispersants.

11. Slurry according to one or more of the preceding claims,
    **characterized in that**
    said agglomerated carbonate-containing pigment has the following fineness characteristics:

    a) 82 - 98 % by weight < 2μm;

    b) 51 - 89 % by weight < 1μm;

    c) 0 - 9 % by weight < 0,2 μm; more preferably

    a) 83 - 98 % by weight < 2 μm;

    b) 54 - 88 % by weight < 1 μm;

    c) 0 - 8 % by weight < 0,2 μm; and preferably

    a) 84 - 97 % by weight < 2 μm;

    b) 55 - 85 % by weight < 1 μm;

    c) 0 - 7 % by weight < 0,2 μm.

12. Slurry according to one or more of the preceding claims,
    **characterized in that**
    the contrast factor is 1,5 - 1,9, more preferably 1,5 - 1,8, and preferably 1,5 - 1,75.

13. Slurry according to one or more of the preceding claims,
    **characterized in that**
    the porosity is 47 - 65 %, more preferably 49 - 63 %, and preferably 51 - 61 %.

14. Process for the preparation of the slurry according to one or more of the preceding claims,
    **characterized in that**

    a) a starting material processed according to the prior art is subjected to wet grinding at a solids content of 25 - 40 % by wt. without dispersant to obtain a fineness of 50 - 90 % by wt. < 1μm,

    b) subsequently, agglomeration of the ultra-fine particles is effected by heat treating the slurry without added dispersant;

    c) then, the agglomerated slurry - if necessary - is dewatered to obtain a solids content of 25 - 70 % by weight of pigment;
d) eventually, such dispersants known per se or commercially available, respectively, are added under stirring which ensure that the agglomerates are preserved.

**15.** Process according to claim 14,
**characterized in that**
said agglomeration is carried out by heating the slurry to a temperature of 65°C to 80°C under stirring of the slurry over a period until agglomeration is complete.

**16.** Use of the slurry according to one or more of claims 1 - 13, in papermaking, in particular in the paper pulp, in coated papers and card, and in the paint and laquer industry in particular for the preparation of aqueous paint systems.


**Revendications**

**1.** Dispersion, contenant de l'eau, un pigment carbonaté et un dispersant, **caractérisée en ce qu'**elle se compose de :

25 à 70 % en poids de pigment carbonaté aggloméré et
0,1 à 1,0 % en poids d'un dispersant ou d'une combinaison de dispersants, le reste étant de l'eau jusqu'à 100% en poids, dispersion dans laquelle le pigment carbonaté aggloméré présente les caractéristiques de finesse suivantes

a) 80 à 99 % en poids < 2 $\mu$m
b) 50 à 90 % en poids < 1 $\mu$m
c) 0 à 10 % en poids < 0,2 $\mu$m et
d) un facteur gamma compris entre 1,5 et 2,0 et
e) une porosité comprise entre 45 et 65 %,

et dans laquelle il est utilisé des dispersants ou combinaisons de dispersants, connus en soi ou courants dans le commerce, de façon à empêcher que les agglomérats du pigment carbonaté aggloméré ne se détruisent de nouveau dans la dispersion.

**2.** Dispersion selon la revendication 1, contenant de l'eau, un pigment carbonaté et un dispersant, **caractérisée en ce qu'**elle se compose de :

25 à 70 % en poids de pigment carbonaté aggloméré et
0,1 à 1,0 % en poids d'un dispersant ou d'une combinaison de dispersants, le reste étant de l'eau juqu'à 100% dans laquelle le piment carbonaté aggloméré présente les caractéristiques de finesse suivantes

a) 80 à 99 % en poids < 2 $\mu$m
b) 50 à 90 % en poids < 1 $\mu$m
c) 0 à 10 % en poids < 0,2 $\mu$m et
d) un facteur gamma compris entre 1,5 et 2,0 et
e) une porosité comprise entre 45 et 65 %,

et dans laquelle l'agglomération du pigment carbonaté est obtenue en soumettant la dispersion à un traitement thermique jusqu'à la fin de l'agglomération et dans laquelle il est utilisé des dispersants ou combinaisons de dispersants, connus en soi ou courants dans le commerce, de façon à empêcher que les agglomérats du pigment carbonaté aggloméré ne se détruisent de nouveau dans la dispersion.

**3.** Dispersion selon la revendication 1 ou 2, **caractérisée en ce que** les pigments carbonatés agglomérés se composent de craie et/ou de calcaire et/ou de marbre et/ou de carbonate de calcium à base de dolomite et/ou de dolomite et/ou de craie naturelle et/ou de calcaire naturel et/ou de carbonate de calcium à base de dolomite naturel et/ou de dolomite naturelle.

**4.** Dispersion selon la revendication 1 ou 2, **caractérisée en ce qu'**il est utilisé des dispersants cationiques seuls ou en combinaison avec des dispersants anioniques.

**5.** Dispersion selon l'une ou plusieurs des revendications précédentes, **caractérisée en ce qu'**il est utilisé comme dispersant cationique des composés ammonium quaternaires et comme dispersant anionique de l'acide polyacrylique.

**6.** Dispersion selon l'une ou plusieurs des revendications précédentes, **caractérisée en ce qu'**il est utilisé comme dispersant

    l'acide acrylique et/ou
    un ester d'acide acrylique et/ou
    un amide d'acide acrylique et/ou
    un halogénure d'amide d'acide acrylique, en particulier
    le chlorure d'amide d'acide acrylique et/ou
    des copolymères des présents dispersants et/ou l'acide polyacrylique ou les composés de l'acide méthacrylique correspondant aux présents composés.

**7.** Pulpe selon l'une ou plusieurs des revendications précédentes, **caractérisée en ce que**

    a) la combinaison de dispersants se compose d'un copolymère obtenu à partir des monomères

        a α) halogénure de l'ester d'acide N-tri-alkyl-amino-alkyl-méthacrylique
        b β) acide acrylique

    b) un copolymère obtenu à partir des monomères

        b α) halogénure de l'amide d'acide N-alkyl-N'-trialkyl-amino-acrylique
        b β) halogénure de l'alkyl-ester d'acide N-tri-alkyl-amino-acrylique

    c) acide polyacrylique.

**8.** Dispersion selon l'une ou plusieurs des revendications précédentes, **caractérisée en ce que**

    a) la combinaison de dispersants se compose d'un copolymère obtenu à partir des monomères

        a α) chlorure d'éthylester d'acide N-Triméthytl-amino-méthacrylique
        a β) acide acrylique

    b) un copolymère obtenu à partir des monomères

        b α) chlorure d'amide d'acide N-propyl-N'-trimétbytl-amino-acrylique
        b β) chlorure d'éthylester d'acide N-Triméthytl-amino-acrylique

    c) acide polyacrylique.

**9.** Dispersion selon l'une ou plusieurs des revendications précédentes, **caractérisée en ce qu'**il est contenu 26 à 69 % en poids, de préférence 27 à 67 % en poids et préférentiellement 28 à 65 % en poids de pigment carbonaté aggloméré.

**10.** Dispersion selon l'une ou plusieurs des revendications précédentes, **caractérisée en ce qu'**il est contenu 0,15 à 0,95 % en poids, de préférence 0,17 à 0,9 % en poids et préférentiellement 0,2 à 0,88 % en poids du dispersant ou de la combinaison de dispersants.

**11.** Dispersion selon l'une ou plusieurs des revendications précédentes, **caractérisée en ce que** le pigment carbonaté aggloméré présente les caractéristiques de finesse suivante :

    a) 82 à 98 % en poids < 2 $\mu$m
    b) 51 à 89 % en poids < 1 $\mu$m
    c) 0 à 9 % en poids < 0,2 $\mu$m, de préférence
    a) 83 à 98 % en poids < 2 $\mu$m
    b) 54 à 88 % en poids < 1 $\mu$m

c) 0 à 8 % en poids < 0,2 μm, de préférence
a) 84 à 97 % en poids < 2 μm
b) 55 à 85 % en poids < 1 μm
c) 0 à 7 % en poids < 0,2 μm

**12.** Dispersion selon l'une ou plusieurs des revendications précédentes, **caractérisée en ce que** le facteur gamma est compris entre 1,5 et 1,9, de préférence 1,5 et 1,8 et préférentiellement 1,5 et 1,75.

**13.** Dispersion selon l'une ou plusieurs des revendications précédentes, **caractérisée en ce que** la porosité est comprise entre 47 et 65 %, de préférence entre 49 et 63 % et préférentiellement entre 51 et 61 %.

**14.** Procédé de fabrication de la dispersion selon l'une ou plusieurs des revendications précédentes, **caractérisé en ce que**

a) un matériau de départ préparé selon l'état de la technique est broyé dans un broyage humide avec une teneur en matière solide comprise entre 25 et 40 % en poids sans dispersant pour obtenir une finesse entre 50 et 90 % < 1 μm,
b) ensuite l'agglomération des particules ultrafines est réalisée en traitant thermiquement la dispersion sans dispersant,
c) ensuite la dispersion agglomérée, si nécessaire, est déshydratée pour obtenir une teneur en matière solide comprise entre 25 et 70 % en poids de pigment et
d) enfin il est ajouté, tout en agitant, des dispersants connus en soi ou courants dans le commerce afin de garantir le maintien des agglomérats.

**15.** Procédé selon la revendication 14, **caractérisé en ce que** l'agglomération est réalisée en chauffant la pulpe à une température comprise entre 65°C et 80°C et en agitant la dispersion pendant un certain temps jusqu'à ce que l'agglomération soit terminée.

**16.** Utilisation de la pulpe selon l'une ou plusieurs des revendications 1 à 13 dans la fabrication du papier, en particulier de la pâte à papier, de papiers couchés et du carton ainsi que dans l'industrie de la laque et des colorants, en particulier pour fabriquer de la peinture à l'eau.